Europäisches Patentamt

European Patent Office

Office européen des brevets

(19)

(11) **EP 1 470 459 B1**

(12) **EUROPÄISCHE PATENTSCHRIFT**

(45) Veröffentlichungstag und Bekanntmachung des Hinweises auf die Patenterteilung:
**17.08.2005   Patentblatt 2005/33**

(21) Anmeldenummer: **02776725.0**

(22) Anmeldetag: **25.09.2002**

(51) Int Cl.7: **G05B 23/02**

(86) Internationale Anmeldenummer:
**PCT/DE2002/003631**

(87) Internationale Veröffentlichungsnummer:
**WO 2003/065138 (07.08.2003 Gazette 2003/32)**

(54) **FRÜHZEITIGE PROGNOSE DER ZUVERLÄSSIGKEIT EINER TECHNISCHEN ANORDNUNG**

EARLY PROGNOSIS OF THE RELIABILITY OF A TECHNICAL ARRANGEMENT

PRONOSTIC PRECOCE DE LA FIABILITE D'UN ENSEMBLE TECHNIQUE

(84) Benannte Vertragsstaaten:
**DE FR GB**

(30) Priorität: **01.02.2002   DE 10204048**

(43) Veröffentlichungstag der Anmeldung:
**27.10.2004   Patentblatt 2004/44**

(73) Patentinhaber: **Siemens Aktiengesellschaft
80333 München (DE)**

(72) Erfinder:
• **ELBEL, Benedikte
  80805 München (DE)**
• **MÄCKEL, Oliver
  81929 München (DE)**

(56) Entgegenhaltungen:
**US-A- 5 210 704          US-A- 5 822 218**

**Beschreibung**

Die Anmeldung betrifft die Prognose der Zuverlässigkeit einer technischen Anordnung, die Prozessormittel aufweist, auf denen Programmmittel ausgeführt werden.

Technische Anordnungen bieten eine immer größere Funktionsvielfalt. Oftmals sind die zugehörigen Funktionen nur noch realisierbar, indem in einer technischen Anordnung Prozessormittel eingesetzt werden, auf denen Programmmittel ausgeführt werden. So sind beispielsweise bei einem Videorecorder oder einem Mobiltelefon Prozessormittel und die zugehörigen Programmmittel unverzichtbare Bestandteile dieser technischen Anordnungen geworden.

Je mehr die Funktionen einer technischen Anordnung nicht mehr beispielsweise durch reine Mechanik realisiert sind, sondern dazu die erwähnten Prozessor- und Programmmittel eingesetzt werden müssen, desto mehr spielt die Zuverlässigkeit der Programmmittel eine entscheidende Rolle für die Zuverlässigkeit der gesamten technischen Anordnung.

Fehler in den Programmmitteln führen in der Regel zu einem teilweisen oder vollständigen Ausfall der technischen Anordnung. Solche Ausfälle können sich in Form von Fehlfunktionen manifestieren oder auch darin, dass bestimmte technische Funktionen der technischen Anordnung nicht zur Verfügung stehen. Ausfälle können auch zu Schäden in der Mechanik oder Elektronik der technischen Anordnung führen. Schließlich können solche Ausfälle oftmals ernstzunehmende Kollateralschäden hervorrufen, wie etwa das Austreten von Kühlflüssigkeit aus einem Kühlschrank oder einem Reaktorbehälter.

Deshalb ist es für den Fachmann entscheidend, bereits bei der Entwicklung der technischen Anordnung und der zugehörigen Programmmittel Aussagen über die Zuverlässigkeit machen zu können bzw. Aussagen über den Aufwand, der notwendig ist, um einen bestimmten Grad an Zuverlässigkeit zu erzielen.

Aus Lawrence, Dennis: "Software Reliability and Safety in Nuclear Reactor Protection Systems", US Nuclear Regulatory Commission, 1993, Seiten 101 bis 105 sind Modelle, insbesondere das Musa-Modell, bekannt, mit denen der Anstieg der Zuverlässigkeit von Programmmitteln in einem Testzeitraum ermittelt werden kann.

Ein Nachteil dieser Modelle besteht darin, dass sie erst relativ spät eingesetzt werden können, nämlich erst dann, wenn sich die Programmmittel und die technische Anordnung bereits in der Testphase befinden. Innerhalb einer Einteilung der Entwicklung und des Einsatzes von Programmmitteln in Analysephase, Entwurfsphase, Implementierungsphase, Testphase und Feldphase steht die Testphase am Ende des Entwicklungszeitraums und an vorletzter Stelle der Gesamtkette.

Es besteht aber ein Bedürfnis, Zuverlässigkeitsprognosen für technische Anordnungen bereits viel früher in der Entwicklung der zugehörigen Programmmittel zu erstellen.

Aus dem Fachgebiet der Systemanalyse technischer Anordnungen sind Methoden zur Aufwandsschätzung bekannt. So ist aus Balzert, Helmut: "Lehrbuch der Software-Technik", 2. Auflage, Spektrum Akademischer Verlag, Heidelberg, 2000, Seiten 83 bis 93 etwa die Function-Point-Methode bekannt, bei der der Aufwand für die Erstellung von Programmmittel mit Hilfe von Funktionspunkten quantifiziert wird. Aus den Funktionspunkten kann der Aufwand für die Implementierung abgeschätzt werden, indem jedem Funktionspunkt eine durchschnittliche Anzahl von Programmierzeilen (Lines of Code) zugeschrieben wird.

Im Fachgebiet der Qualitätssicherung technischer Anordnungen ist es bekannt, aus der Anzahl der Programmzeilen die Anzahl der zu erwartenden Fehler zu bestimmen. Siehe hierzu etwa Liggesmeyer, Peter: "Qualitätssicherung softwareintensiver technischer Systeme", Spektrum Akademischer Verlag, Heidelberg, 2000, Seite 192.

In der WO00/29993A2 ist ein Verfahren beschrieben, bei dem mittels statistischer Verfahren Modelle berechnet werden, die ein technisches System beschreibende Größen als Variablen umfassen. Mit diesen Modellen können Prognosen hinsichtlich Zeitpunkt bzw. Qualität der Fertigstellung des technischen Systems getroffen werden. Das Verfahren klassifiziert die Modelle hinsichtlich ihrer Vorhersagegüte und berechnet mittels eines Holdout-Verfahrens ein Modell, das nur noch signifikante Größen enthält, die entscheidenden Einfluss auf die Realisierung des technischen Systems haben. Als statistische Verfahren zur Berechnung der Modelle werden hierbei insbesondere Regressions- oder Diskriminanz-Analyseverfahren verwendet (siehe z.B. Richard A. Johnson, Dean W. Wichern, "Applied Multivariate Statistical Analysis", Prentice Hall, 1982).

Der Erfindung liegt die technische Aufgabe zugrunde, dem technischen Fachmann eine frühzeitige und zuverlässige Prognose der Zuverlässigkeit einer von ihm zu entwickelnden technischen Anordnung zu ermöglichen, bei der technische Funktionen durch auf Prozessormitteln ablaufende Programmmittel ausgeführt werden.

Diese Aufgabe wird durch die Erfindungen der unabhängigen Ansprüche gelöst. Vorteilhafte Ausgestaltungen ergeben sich aus den Unteransprüchen.

Der Erfindung liegt der Gedanke zugrunde, verschiedene Metriken, die unterschiedliche technische Fachleute auf unterschiedlichen Fachgebieten gefunden haben, miteinander zu verbinden und dadurch eine frühzeitige Prognose der Zuverlässigkeit zu ermöglichen.

Entsprechend weist ein Verfahren zur rechnergestützten Prognose der Zuverlässigkeit einer technischen Anordnung unter Verwendung von Prognosemaßen folgende Schritte auf:

Zuerst wird ein Analyse- und/oder Entwurfsprognosemaß ermittelt, das den für das Erstellen der Programmmittel zu erwartenden Aufwand in einer Metrik der Analyse und/oder des Entwurfs der Programmmittel angibt. Hierbei kann der Fachmann auf in der Analyse- und/oder Entwurfsphase, also der Planungsphase, verwendete Aufwandsschätzmethoden zurückgreifen. Er muss dazu sein technisches Wissen über die technischen Funktionen der technischen Anordnung einbringen, für die die Zuverlässigkeit prognostiziert werden soll. Mit dem Analyse- und/oder Entwurfsprognosemaß kann er dann den aufgrund verbaler Anforderungen für das Erstellen der Programmmittel zu erwartenden Aufwand angeben. Eine für diesen Schritt besonders bevorzugte Aufwandsschätzmethode ist die Function-Point-Methode, bei der ein Analyse- und/oder Entwurfsprognosemaß in einer Metrik der Analyse und/oder des Entwurfs in Form von Funktionspunkten angegeben wird.

Aus dem im gerade geschilderten Schritt ermittelten Analyse- und/oder Entwurfsprognosemaß wird dann ein Implementierungsprognosemaß ermittelt, das den für das Erstellen der Programmmittel zu erwartenden Aufwand in einer Metrik der Implementierung angibt. In der am häufigsten verwendeten Metrik der Implementierung wird der für das Erstellen der Programmmittel zu erwartende Aufwand durch die Anzahl der Programmzeilen angegeben. Da dafür auch die gesichertsten Umrechnungsverfahren vorliegen, mit denen die Anzahl der Programmzeilen für eine bestimmte Programmiersprache aus dem Analyse- und/oder Entwurfsprognosemaß bestimmt werden kann, ist die Verwendung der Anzahl von Programmzeilen für das Implementierungsprognosemaß auch besonders bevorzugt. Statt den für das Erstellen der Programmmittel zu erwartende Aufwand durch die Anzahl der Programmzeilen anzugeben, kann aber auch eine andere Metrik der Implementierung verwendet werden, wie etwa eine Halstead-Metrik.

In einem weiteren Schritt wird dann aus dem Implementierungsprognosemaß ein Zuverlässigkeitsprognosemaß ermittelt, das die zu erwartende Zuverlässigkeit der Programmmittel angibt. Auch hier kann der technische Fachmann seine technische Erfahrung einfließen lassen, indem er bei der Ermittlung des Zuverlässigkeitsprognosemaßes aus dem Implementierungsprognosemaß die Art und den Funktionsumfang der technischen Anordnung berücksichtigt.

Das Zuverlässigkeitsprognosemaß enthält die zu erwartende Zuverlässigkeit der Programmmittel vorzugsweise in Form der durchschnittlichen Zeit bis zum Auftreten eines Ausfalls. Es gibt somit die durchschnittliche Ausfallhäufigkeit an.

Sind die Programmmittel die mit Abstand größte Fehlerquelle der technischen Anordnung, so ist das Zuverlässigkeitsprognosemaß für die Programmmittel gleichzeitig ein Maß für die zu erwartende Zuverlässigkeit der gesamten technischen Anordnung. Ansonsten ist zusätzlich noch ein Mangel an Zuverlässigkeit zu berücksichtigen, der sich aus anderen Fehlerquellen ergibt.

Vorzugsweise wird das Zuverlässigkeitsprognosemaß aus dem Implementierungsprognosemaß über die Ermittlung der Fehler ermittelt, die für den für das Erstellen der Programmmittel zu erwartenden Aufwand zu erwarten sind.

Das geschilderte Verfahren bietet den Vorteil, dass eine Prognose über die Zuverlässigkeit der technischen Anordnung zu einem sehr frühen Zeitpunkt erstellt werden kann, nämlich bereits bei der Analyse der Systemanforderungen. Es bietet darüber hinaus den Vorteil, dass die Prognose während des Fortschreitens der Entwicklung der Programmmittel nachgeführt und entsprechend korrigiert werden kann. Insbesondere kann dies nach Feststellen des tatsächlich für das Erstellen der Programmmittel benötigten Aufwands geschehen, indem das Zuverlässigkeitsprognosemaß aus einem Implementierungsmaß neu berechnet wird, das den tatsächlich für das Erstellen der Programmmittel benötigten Aufwand in einer Metrik der Implementierung angibt.

Ist keine Testphase zur Verbesserung der Zuverlässigkeit der Programmmittel vorgesehen bzw. soll die Endzuverlässigkeit der an den Endabnehmer ausgelieferten technischen Anordnung bestimmt werden, so ist das Zuverlässigkeitsprognosemaß ein Feldzuverlässigkeitsprognosemaß bzw. es enthält ein Feldzuverlässigkeitsprognosemaß, das die Zuverlässigkeit der Programmmittel in der Feldphase der Programmmittel angibt.

Alternativ oder darüber hinaus ist und/oder enthält das Zuverlässigkeitsprognosemaß ein Testzuverlässigkeitsprognosemaß, das die Zuverlässigkeit der Programmmittel in einer Testphase der Programmmittel angibt.

In der Regel ist es gerade Sinn der Testphase, die Zuverlässigkeit der Programmmittel zu erhöhen. Das heißt, dass die Zuverlässigkeit der Programmmittel während der Testphase variiert. Insofern ist es für die Prognose sinnvoll, das Testzuverlässigkeitsprognosemaß zeitabhängig zu gestalten und den Verlauf des Testzuverlässigkeitsprognosemaßes während der Testphase zu ermitteln.

So lässt sich zum Beispiel bei einer gewünschten Feldzuverlässigkeit der Programmmittel und einer korrespondierenden Endzuverlässigkeit der technischen Anordnung aus der Ermittlung des Testzuverlässigkeitsprognosemaßes während der Testphase die Dauer und/oder der Aufwand der Testphase bestimmen.

Für die Ermittlung des Testzuverlässigkeitsprognosemaßes während der Testphase lassen sich unterschiedliche Parameter heranziehen. Besonders bevorzugt wird aus dem Implementierungsprognosemaß die zu erwartende maximale Anzahl an Ausfällen bestimmt.

Darüber hinaus kann der Verlauf des Testzuverlässigkeitsprognosemaßes während der Testphase unter Heranziehung einer Ausfallhäufigkeitsverminderungsrate bestimmt werden. Die Ausfallhäufigkeitsverminderungsrate gibt an, in welchem Maße sich die Ausfallhäufigkeit während der Testphase pro Zeiteinheit vermindert. Sie ist damit unter anderem abhängig vom Aufbau der technischen Anordnung und der Bedeutung der Programmmittel für die technische Anordnung und deshalb vom technischen Fachmann zu bestimmen.

Das oben geschilderte Verfahren kann ferner in einer vorteilhaften Ausgestaltung der Erfindung mit bereits aus dem Stand der Technik bekannten Verfahren zur Ermittlung einer Auswahl von signifikanten Größen eines technischen Systems kombiniert werden. Insbesondere kann das obige Verfahren mit dem in der eingangs genannten WO 00/29993 A2 beschriebenen Verfahren kombiniert werden. Hierzu werden als Größen des technischen Systems die Prognosemaße verwendet. Ferner werden in dem Verfahren Datensätze verarbeitet, welche gemessene Zuverlässigkeiten enthalten. Bei diesen Datensätzen handelt es sich vorzugsweise um Informationen über bereits beendete Projekte betreffend die Entwicklung eines technischen Systems. Die Daten dieser Projekte werden nunmehr zur Ermittlung von signifikanten Prognosemaßen eines neuen Projektes herangezogen. Durch das kombinierte Verfahren kann somit eine Auswahl von für die Zuverlässigkeit einer technischen Anordnung signifikanten Prognosemaßen ermittelt werden, wobei in dem Verfahren zunächst die Prognosemaße für jeden Datensatz gemäß dem erfindungsgemäßen Verfahren zur rechnergestützten Prognose der Zuverlässigkeit ermittelt werden und in einem nächsten Schritt die signifikanten Prognosemaße mittels eines aus dem Stand der Technik bekannten Verfahren bestimmt werden. Hierzu werden Modelle ermittelt, welche die Prognosemaße als Variable umfassen, wobei eines der Modelle die signifikanten Prognosemaße umfasst. Die signifikanten Prognosemaße sind hierbei besonders relevant hinsichtlich der Realisierung des technischen Systems und ein Modell, das diese signifikanten Prognosemaße umfasst, gewährleistet eine hohe Zuverlässigkeit der Prognose. Mit dem Verfahren kann somit die Zuverlässigkeit der Prognose optimiert werden.

Vorzugsweise wird mittels der Modelle prognostiziert, ob eine Zielvorgabe für die Zuverlässigkeit der technischen Anordnung eingehalten wird. Eine solche Zielvorgabe kann beispielsweise eine Zeitspanne sein, in der beim Betrieb des technischen Systems keine Ausfälle auftreten dürfen. Die Zielvorgabe ist erfüllt, wenn die Zeitspanne zwischen zwei Ausfällen immer größer als die Zeitspanne der Zielvorgabe ist.

Zusätzlich zu den Prognosemaßen können die Modelle weitere Maße als Variablen umfassen. Dies ist insbesondere dann vorteilhaft, wenn das Analyse- und/oder Entwurfsprognosemaß in Funktionspunkten angegeben wird, denn bei der Ermittlung dieser Funktionspunkte mittels der Function-Point-Methode werden noch weitere Maße ermittelt, die Einfluss auf die Realisation der technischen Anordnung haben. Diese Maße können dann als weitere Maße in den Modellen berücksichtigt werden. Die weiteren Maße hängen hierbei vorzugsweise von Faktoren ab, welche die Entwicklung der technischen Anordnung betreffen, insbesondere Motivation und/oder Kenntnisstand der bei der Entwicklung beteiligten Personen und/oder geplante Zeitdauer für die Entwicklung der technischen Anordnung und/oder geplanter Testaufwand bei der Entwicklung.

Vorzugsweise werden die Modelle anhand der Datensätze klassifiziert, wobei je ein Klassifikationsmaß für die Güte der Klassifikation bestimmt wird. Hierdurch kann für jedes Modell zusätzlich ein Gütewert ermittelt werden, der insbesondere die Zuverlässigkeit der Prognose des Modells wiedergibt. In WO 00/29993 A2 ist beschrieben, auf welche Weise eine solche Klassifikation vorgenommen werden kann.

Die Modelle werden vorzugsweise durch statistische Verfahren, insbesondere durch eine Diskriminanz- oder Regressionsanalyse ermittelt. Solche Verfahren sind aus dem Stand der Technik bekannt.

Zur Ermittlung des Modells mit den signifikanten Prognosemaßen wird auf den Datensätzen ein Holdout-Verfahren durchgeführt. Das Verfahren ist in der WO 00/29993 A2 beschrieben und es wird deshalb an dieser Stelle nicht mehr darauf eingegangen.

In einer weiteren Ausgestaltung der Erfindung werden Modelle, die Prognosemaße als Variablen umfassen, dazu verwendet, die Einhaltung einer Zielvorgabe der Zuverlässigkeit einer technischen Anordnung zu prognostizieren. Dies wird durch ein Verfahren erreicht, bei dem zunächst die Prognosemaße mittels des erfindungsgemäßen Verfahrens zur rechnergestützten Prognose der Zuverlässigkeit ermittelt werden und dann in einem nächsten Schritt Modelle, die Prognosemaße als Variablen umfassen, zur Prognose über die Einhaltung einer Zielvorgabe verwendet werden. Vorzugsweise werden hierbei Modelle verwendet, die mit dem oben geschilderten Verfahren zur Ermittlung einer Auswahl von für die Zuverlässigkeit einer technischen Anordnung signifikanten Prognosemaßen bestimmt wurden. Da für diese Modelle vorzugsweise ein Klassifikationsmaß betreffend die Güte der Klassifikation ermittelt wurde, kann somit zusätzlich noch die Güte der Prognose festgestellt werden. Ferner kann ein Modell, das signifikante Prognosemaße umfasst, in dem Verfahren eingesetzt werden, wodurch eine besonders zuverlässige Prognose erreicht wird.

Die technische Anordnung, deren Zuverlässigkeit ermittelt wird, ist insbesondere ein mobiles Endgerät, eine medizinische Apparatur, eine Vorrichtung zur Steuerung industrieller Fertigungsprozesse, ein Rechner, eine Anordnung zur Energiegewinnung und/oder Energieverteilung und/oder eine Telekommunikationsanlage.

Ein Programmprodukt für eine Datenverarbeitungsanlage, das Software-Codeabschnitte enthält, mit denen eines der geschilderten Verfahren auf der Datenverarbeitungsanlage ausgeführt werden kann, lässt sich durch geeignete Implementierung des Verfahrens in einer Programmiersprache und Übersetzung in von der Datenverarbeitungsanlage ausführbaren Code ausführen. Die Software-Codeabschnitte werden dazu gespeichert. Dabei wird unter einem Programmprodukt das Programm als handelbares Produkt verstanden. Es kann in beliebiger Form vorliegen, so zum Beispiel auf Papier, einem computerlesbaren Datenträger oder über ein Netz verteilt.

Eine Einrichtung, die eingerichtet ist, eines der geschilderten Verfahren auszuführen, lässt sich zum Beispiel durch Programmieren und Einrichten einer Datenverarbeitungsanlage mit zu den genannten Verfahrensschritten gehörigen Mitteln realisieren.

Weitere wesentliche Vorteile und Merkmale der Erfindung ergeben sich aus der Beschreibung eines Ausführungsbeispiels anhand der Zeichnung. Dabei zeigt:

Figur 1    eine Tabelle, die den Ablauf des Verfahrens verdeutlicht;

Figur 2    den Verlauf einer Fehleranzahl während einer Testphase und

Figur    3 eine technische Anordnung.

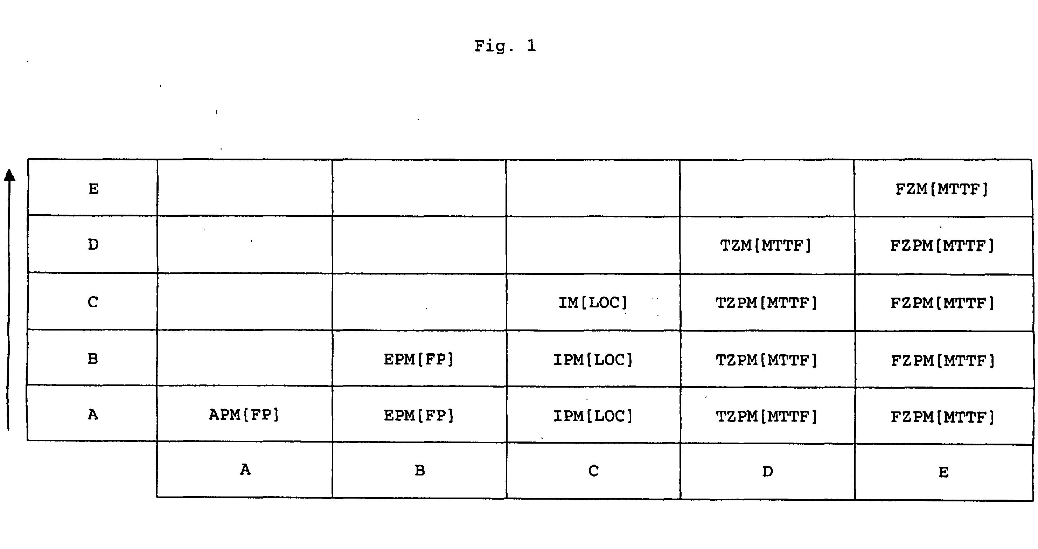

In Figur 1 sind in der Tabelle nach oben die Entwicklungs- und Einsatzphasen von Programmmitteln aufgetragen, die auf Prozessormitteln in einer technischen Anordnung ausführbar sind.

Dies sind: Eine Analysephase A, eine Entwurfsphase B, eine Implementierungsphase C, eine Testphase D und eine Feldphase E. Während die Analysephase A, die Entwurfsphase B, die Implementierungsphase C und die Testphase D Entwicklungsphasen sind, ist die Feldphase E durch den Einsatz der Programmmittel und der technischen Anordnung beim Endabnehmer, also im Feld, bestimmt, weshalb sie insbesondere unter Garantiegesichtspunkten interessant ist.

Nach rechts sind in der Tabelle von Figur 1 die einzelnen Phasen angegeben, die in der jeweiligen Zeile prognostiziert werden bzw. deren Ergebnis tatsächlich vorliegt.

Entsprechend lässt sich eine in der Analysephase A vorgenommene, frühzeitige Prognose der Zuverlässigkeit vollständig der Zeile der Analysephase A entnehmen. Die in den übrigen Zeilen angegebenen Werte stellen Korrekturschritte dieser frühzeitigen Prognose während des Verlaufs der Programmmittelentwicklung und -auslieferung dar.

Während der Analysephase A, in der die Systemanforderungen analysiert werden, wird zunächst ein Analyseprognosemaß APM ermittelt. Dazu werden basierend auf einer Anforderungsspezifikation mit Hilfe der Function-Point-Methode Aufwände geschätzt, und das Analyseprognosemaß APM in Funktionspunkten FP angegeben.

Aus dem Analyseprognosemaß APM wird in der Analysephase A ein Entwurfsprognosemaß EPM für die Entwurfsphase B in Funktionspunkten ermittelt. Dies ist in der Spalte der Entwurfsphase B der Zeile der Analysephase A der Tabelle von Figur 1 wiedergegeben.

Alternativ zu der Ermittlung des Entwurfsprognosemaßes EPM aus dem Analyseprognosemaß APM kann auch erst in der Entwurfsphase B ein Entwurfsprognosemaß EPM erstellt werden oder es wird gleich ein gemeinsames Analyse- und Entwurfsprognosemaß für die Analyse- und Entwurfsphase erstellt.

Statt wie bisher üblich aus dem Analyse- und/oder Entwurfsprognosemaß APM, EPM nur den Entwicklungsaufwand für die Programmmittel abzuleiten, wird in der Analysephase A aus dem Analyse- und Entwurfsprognosemaß APM, EPM ein Implementierungsprognosemaß IPM ermittelt, in dem die Funktionspunkte FP in die zu erwartenden Anzahl LOC von Programmzeilen umgerechnet wird.

Basierend auf dieser durch das Implementierungsprognosemaß IPM angegebenen, prognostizierten Anzahl LOC von Programmzeilen lassen sich in einem nächsten Schritt die Fehler abschätzen, die bei der ersten Implementierung der Programmmittel auftreten. Unter Berücksichtigung der geplanten Test- und Korrekturaufwände, die gegebenenfalls auch mittels der Function-Point-Methode ermittelt werden, lässt sich ein Zuverlässigkeitsprognosemaß ermitteln.

Das Zuverlässigkeitsprognosemaß besteht aus einem Testzuverlässigkeitsprognosemaß TZPM, das die sich in der Regel verändernde Zuverlässigkeit der Programmmittel während einer Testphase in Form der durchschnittlichen Zeit MTTF bis zum Auftreten eines Ausfalls der technischen Anordnung aufgrund eines Fehlers in den Programmmitteln enthält, und aus dem Feldzuverlässigkeitsprognosemaß FZPM, das die Zuverlässigkeit der Programmmittel in der Feldphase E in Form der durchschnittlichen Zeit MTTF bis zum Ausfall der technischen Anordnung aufgrund eines Fehlers in den Programmmitteln angibt.

Die Ermittlung des Zuverlässigkeitsprognosemaßes TZPM, FZPM aus dem Implementierungsprognosemaß IPM mit Hilfe von Zuverlässigkeitsmodellen wird im Detail weiter untern beschrieben.

Durch das bislang beschriebene Verfahren, das vollständig während der Analysephase A durchgeführt werden kann, lässt sich schon in der Analysephase relativ einfach und kostengünstig eine Zuverlässigkeitsprognose erstellen. Insbesondere kann schon zu diesem frühen Zeitpunkt ein Testzuverlässigkeitsprognosemaß TZPM und/oder ein Feldzuverlässigkeitsprognosemaß FZPM angegeben werden.

Die dabei gefundenen Werte zeigten bei der versuchsweisen Durchführung des Verfahrens eine erstaunlich hohe Übereinstimmung mit den hinterher tatsächlich eingetretenen Werten. Trotzdem liegt ein weiterer besonderer Vorteil des Verfahrens darin, dass die einmal aufgestellte Prognose während der Entwicklung und dem Einsatz der Programmmittel ständig weiter verbessert werden kann. Dies ist in den Zeilen der Entwurfsphase B, der Implementierungsphase C, der Testphase D und der Feldphase E der Tabelle der Figur 1 dargestellt.

Während in der Analysephase A das Zuverlässigkeitsprognosemaß in Form des Testzuverlässigkeitsprognosemaßes TZPM und des Feldzuverlässigkeitsprognosemaßes FZPM allein durch entsprechende Umformungen aus dem Analyseprognosemaß APM bestimmt wird, lässt sich in der Entwurfsphase B das Zuverlässigkeitsprognosemaß bereits aus dem Entwurfsprognosemaß bestimmen. Da das Entwurfsprognosemaß den für die Erstellung der Programmmittel zu erwartenden Aufwand in der Regel etwas genauer angibt als das Analyseprognosemaß, ist durch diese Korrektur in der Entwurfsphase B eine Verbesserung des Zuverlässigkeitsprognosemaßes TZPM, FZPM zu erwarten.

Substantiell korrigieren lässt sich das Ergebnis der Zuverlässigkeitsprognose aber in der Implementierungsphase C, wenn der tatsächliche Aufwand für die Erstellung der Programmmittel in Form der tatsächlichen Anzahl LOC von Programmzeilen bekannt wird. Dann lässt sich das Implementierungsprognosemaß IMP durch das Implementierungsmaß IM ersetzen und daraus das Zuverlässigkeitsprognosemaß TZPM, FZPM ermitteln.

In der Testphase D kann schließlich das Testzuverlässigkeitsprognosemaß TZPM durch das Testzuverlässigkeitsmaß TZM ersetzt werden, wodurch das prognostizierte Feldzuverlässigkeitsprognosemaß FZPM weiter korrigiert wird.

In der Feldphase E lässt sich schließlich die tatsächliche Zuverlässigkeit der Programmmittel bzw. der technischen Anordnung und damit das tatsächliche Feldzuverlässigkeitsmaß FZM ermitteln. Dieses Feldzuverlässigkeitsmaß kann dann zur Verbesserung zukünftiger Prognosen für andere technische Anordnungen bzw. Programmmittel mit den zwischenzeitlich ermittelten Feldzuverlässigkeitsprognosemaßen verglichen werden.

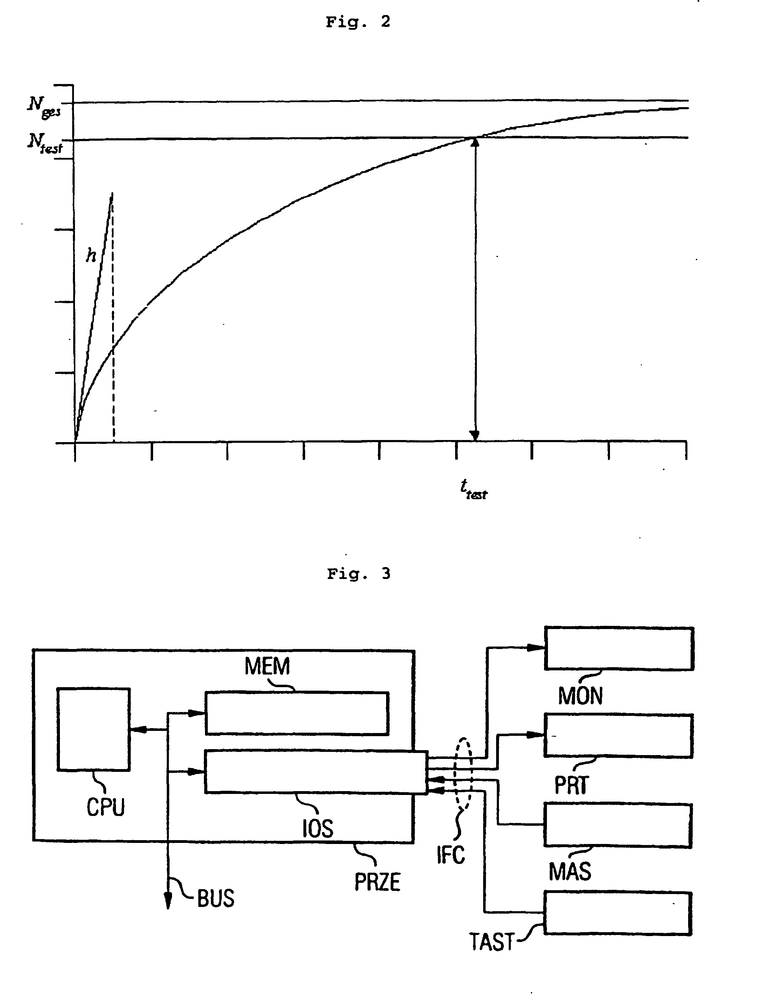

Mit Bezug auf Figur 2 wird nun ein Zuverlässigkeitsmodell für die Programmmittel erläutert, mit dem der Verlauf des Testzuverlässigkeitsprognosemaßes TZPM während der Testphase D bestimmt werden kann. Die Prognose der Zuverlässigkeit von Programmmitteln auf Basis von geschätzten Fehlerzahlen kann, anstatt zeitunabhängiger Fehlerkorrekturraten und Fehlerfindungsraten, am besten mit Hilfe von solchen Zuverlässigkeitsmodellen für die Zuverlässigkeit von Programmmitteln erfolgen, da diese Informationen über das Test- und Korrekturgeschehen in der Testphase der technischen Anordnung berücksichtigen. Das hier vorgestellte Zuverlässigkeitsmodell geht von einer endlichen Fehlermenge in den Programmmitteln aus und ist damit für eine Prognose auf Basis einer geschätzten Fehlerzahl besonders geeignet, die aus dem Implementierungsprognosemaß IPM ermittelt werden kann. Das Modell basiert auf einer Annahme, dass die Ausfallrate der Programmmittel während der Benutzung zu jedem Zeitpunkt proportional zur Anzahl der unentdeckten Fehler ist.

Die mittlere Ausfallzahl m (t) in Abhängigkeit von der Ausführungszeit t kann durch

$$m(t) = N\left(1 - \exp\left(-\frac{h}{N}t\right)\right) \qquad (1)$$

angegeben werden. Dabei bezeichnet m die anfänglich im System vorhandene Gesamtfehlerzahl, die aus dem Implementierungsprognosemaß ermittelt wird. Die Konstante h repräsentiert die Ausfallrate zu Beginn der kumulierten Fehlerkurve, also der Testphase D. Sie hängt von der Auftretensrate für einen einzelnen Fehler und der Fehlerkorrekturrate ab. Da hier ein proportionaler Zusammenhang zwischen dem Umfang der Programmmittel gegeben durch das Implementierungsprognosemaß und der erhaltenen Gesamtfehlerzahl vorausgesetzt wird, ist es sinnvoll, h bei gleichbleibender Teststrategie als für die technische Anordnung spezifische Konstante aufzufassen.

Der in Gleichung 1 gegebene Zusammenhang ermöglicht die Ableitung von Zuverlässigkeitskenngrößen, die mit einem vorgegebenen Testaufwand erreichbar sind, auf Basis der geschätzten Fehlerzahlen. So ergibt sich aus der Ableitung des in Gleichung 1 angegebenen Ausdrucks die Ausfallrate

$$\lambda(t) := m'(t) = h\exp\left(-\frac{h}{N}t\right) \qquad (2)$$

deren Kehrwert als durchschnittliche Zeit MTTF bis zum Auftreten eines Ausfalls (Mean-Time-to-Failure)

$$MTTF(t) := \frac{1}{\lambda(t)} = \left(h\exp(-\frac{h}{N}t)\right)^{-1} \qquad (3)$$

bezeichnet wird.

Um das in Gleichung 1 beschriebene Modell zur Ermittlung von Zuverlässigkeitsprognosemaßen verwenden zu können, sind zunächst die Parameter des Modells zu bestimmen.

Der Parameter N entspricht der geschätzten Gesamtfehlerzahl, die sich aus dem Implementierungsprognosemaß ermitteln lässt. Der mit h bezeichnete Parameter, der von der Art der technischen Anordnung abhängt, ist auf Basis von Prognosen für vergleichbare technische Anordnungen zu ermitteln. Für diese Prognosen für vergleichbare technische Anordnungen ist die Zahl der geschätzten Gesamtfehler im System $N_{ges}$ die Zahl der im Systemtest gefundenen Fehler $N_{test}$ sowie der eingesetzte Test Aufwand $t_{test}$ anzugeben.

Der Parameter h kann nun anhand der sich aus Gleichung 1 ergebenden Beziehung

$$h = -\frac{N_{ges}}{t_{test}} \ln\left(1 - \frac{N_{test}}{N_{ges}}\right) \qquad (4)$$

bestimmt werden. Figur 2 veranschaulicht in einer Prinzipskizze den Zusammenhang des Modells und der Parameter. Wie die übrigen in den einzelnen Schritten des Verfahrens zur Prognose der Zuverlässigkeit einer technischen Anordnung verwendeten Faktoren bzw. Tabellen sollte die Festlegung des zur Schätzung verwendeten Parameters h auf einer möglichst breiten, fortlaufend aktualisierten Datenbasis nach dem oben beschriebenen Verfahren vorgenommen werden.

Mit Hilfe des so ermittelten Parameters h kann auf Basis der geschätzten Gesamtfehlerzahl bei vorgegebenem Testaufwand die zu erwartende Zuverlässigkeit in Form eines Zuverlässigkeitsmaßes beispielsweise durch Gleichung 3 oder Gleichung 2 ermittelt werden. Weiterhin ermöglicht der Modellzusammenhang, den zur Erreichung einer in Form der durchschnittlichen Zeit MTTF bis zum Auftreten eines Ausfalls oder der Ausfallrate vorgegebenen Zuverlässigkeit benötigten Testaufwand zu bestimmen. Unter Berücksichtigung der für den Test geplanten Ressourcen kann so eine fundierte Planung des Freigabetermins der Programmmittel bzw. der technischen Anordnung bereits in der Analysephase A vorgenommen werden.

Das oben beschriebene Verfahren kann in einem Verfahren zur Ermittlung der für die Zuverlässigkeit einer technischen Anordnung signifikanten Prognosemaße eingesetzt werden. Die signifikanten Prognosemaße können wiederum in einem Verfahren zur Prognose der Einhaltung einer Zielvorgabe der Zuverlässigkeit einer technischen Anordnung eingesetzt werden, wobei durch die Verwendung von signifikanten Prognosemaßen eine sehr hohe Zuverlässigkeit der Prognose gewährleistet wird.

Figur 3 zeigt eine technische Anordnung mit Prozessormitteln PRZE, auf denen Programmmittel ausführbar sind. Die Programmmittel PRZE umfassen einen Prozessor CPU, einen Speicher SPE und eine Input-/Output-Schnittstelle IOS, die über ein Interface IFC auf unterschiedliche Art und Weise genutzt wird: Über eine Grafikschnittstelle wird eine Ausgabe auf einem Monitor MON sichtbar und/oder auf einem Drucker PRT ausgegeben. Eine Eingabe erfolgt über eine Maus MAS oder eine Tastatur TAST. Auch verfügen die Prozessormittel PRZE über einen Datenbus BUS, der die Verbindung von einem Speicher MEM, dem Prozessor CPU und der Input-/Output-Schnittstelle IOS gewährleistet. Weiterhin sind an den Datenbus BUS zusätzliche Komponenten anschließbar, zum Beispiel zusätzlicher Speicher, ein Datenspeicher in Form einer Festplatte oder ein Scanner. Die technische Anordnung kann auch als Einrichtung zum Prognostizieren der Zuverlässigkeit einer anderen technischen Anordnung genutzt werden.

Die Erfindungen weisen_folgende Vorteile auf:

- Ausgangspunkte sind die in der Analysephase feststehenden Systemanforderungen, daher ist eine frühzeitige Prognose möglich. Während der Entwicklung kann die Prognose in der mit Bezug auf die Tabelle von Figur 1 erläuterten Vorgehensweise ständig verbessert werden.

- Das Verfahren erlaubt eine präzise Abschätzung des Testaufwands durch Nutzung von Zuverlässigkeitsmodellen für die Programmmittel .

- Das Verfahren erlaubt eine präzise Abschätzung des Korrekturaufwands durch den Zwischenschritt der Abschätzung von Fehlern in den Programmmitteln.

- Eine leichte Anpassung an verschiedene Anwendungsbereiche und neue Techniken und Technologien durch Ausnutzung der Function-Point-Methode und individueller Transformationsregeln ist möglich.

- Das Verfahren kann zur Bestimmung von für die Zuverlässigkeit einer technischen Anordnung signifikanten Prognosemaßen eingesetzt werden.

- Das Verfahren kann zur zuverlässigen Prognose der Einhaltung einer Zielvorgabe der Zuverlässigkeit einer technischen Anordnung verwendet werden.

**Patentansprüche**

1. Verfahren zur rechnergestützten Prognose der Zuverlässigkeit einer technischen Anordnung unter Verwendung von Prognosemaßen, wobei die technische Anordnung Prozessormittel (PRZE) aufweist, auf denen Programmmittel ausgeführt werden,

   - bei dem ein Analyse- und/oder Entwurfsprognosemaß (APM, EPM), das den für das Erstellen der Programmmittel zu erwartenden Aufwand in einer Metrik der Analyse und/oder des Entwurfs angibt, ermittelt wird,
   - bei dem ein Implementierungsprognosemaß (IPM), das den für das Erstellen der Programmmittel zu erwartenden Aufwand in einer Metrik der Implementierung angibt, aus dem Analyse- und/oder Entwurfsprognosemaß (APM, EPM) ermittelt wird,
   - bei dem ein Zuverlässigkeitsprognosemaß (TZPM, FZPM), das die zu erwartende Zuverlässigkeit der Programmmittel angibt, aus dem Implementierungsprognosemaß (IPM) ermittelt wird.

2. Verfahren nach zumindest Anspruch 1,
   bei dem das Zuverlässigkeitsprognosemaß (TZPM, FZPM) aus dem Implementierungsprognosemaß (IPM) über die Ermittlung der Fehlerzahl ermittelt wird, die für den für das Erstellen der Programmmittel zu erwartenden Aufwand zu erwarten ist.

3. Verfahren nach zumindest einem der vorhergehenden Ansprüche,
   bei dem die Prognose nach Feststellen des tatsächlich für das Erstellen der Programmmittel benötigten Aufwands korrigiert wird, indem das Zuverlässigkeitsprognosemaß (TZPM, FZPM) aus einem Implementierungsmaß (IM) neu berechnet wird, das tatsächlich für das Erstellen der Programmmittel benötigten Aufwand in einer Metrik der Implementierung angibt.

4. Verfahren nach zumindest einem der vorhergehenden Ansprüche,
   bei dem das Analyse- und/oder Entwurfsprognosemaß (APM, EPM) den für das Erstellen der Programmmittel zu erwartenden Aufwand in Funktionspunkten (FP) der Function-Point-Methode angibt.

5. Verfahren nach zumindest einem der vorhergehenden Ansprüche,
   bei dem das Implementierungsprognosemaß (IPM) den für das Erstellen der Programmmittel zu erwartenden Aufwand in der Anzahl (LOC) der zu erwartenden Programmzeilen angibt.

6. Verfahren nach zumindest einem der vorhergehenden Ansprüche,
   bei dem das Zuverlässigkeitsprognosemaß (TZPM, FZPM) die zu erwartende Zuverlässigkeit der Programmmittel in Form der durchschnittlichen Zeit (MTTF) bis zum Auftreten eines Ausfalls enthält.

7. Verfahren nach zumindest einem der vorhergehenden Ansprüche,
   bei dem das Zuverlässigkeitsprognosemaß (TZPM, FZPM) ein Feldzuverlässigkeitsprognosemaß (FZPM) enthält, das die Zuverlässigkeit der Programmmittel in einer Feldphase der Programmmittel angibt.

8. Verfahren nach zumindest einem der vorhergehenden Ansprüche,
   bei dem das Zuverlässigkeitsprognosemaß (TZPM, FZPM) ein Testzuverlässigkeitsprognosemaß (TZPM) enthält, das die Zuverlässigkeit der Programmmittel in einer Testphase der Programmmittel angibt.

9. Verfahren nach zumindest Anspruch 8,
   bei dem der Verlauf des Testzuverlässigkeitsprognosemaßes (TZPM) während der Testphase ermittelt wird.

10. Verfahren nach zumindest Anspruch 8,
    bei dem die Dauer und/oder der Aufwand der Testphase aus der Ermittlung des Testzuverlässigkeitsprognosemaßes (TZPM) während der Testphase ermittelt wird.

**11.** Verfahren nach zumindest Anspruch 8,
bei dem aus dem Implementierungsprognosemaß (IPM) die zu erwartende maximale Anzahl an Ausfällen bestimmt wird.

**12.** Verfahren nach zumindest Anspruch 8,
bei dem das Testzuverlässigkeitsprognosemaß (TZPM) mit einer Ausfallhäufigkeitsverminderungsrate ermittelt wird.

**13.** Verfahren zur Ermittlung einer Auswahl von für die Zuverlässigkeit einer technischen Anordnung signifikanten Prognosemaßen unter Verwendung von mehreren Datensätzen umfassend gemessene Zuverlässigkeiten, wobei die technische Anordnung Prozessormittel (PRZE) aufweist, auf denen Programmmittel ausgeführt werden, wobei das Verfahren folgende Schritte umfasst:

- Ermittlung der Prognosemaße für jeden Datensatz nach einem Verfahren der vorhergehenden Ansprüche;
- Bestimmung der signifikanten Prognosemaße durch Ermittlung von Modellen, die Prognosemaße als Variablen umfassen, wobei eines der Modelle die signifikanten Prognosemaße umfasst.

**14.** Verfahren nach Anspruch 13, bei dem
mittels der Modelle prognostiziert wird, ob eine Zielvorgabe für die Zuverlässigkeit der technischen Anordnung eingehalten wird.

**15.** Verfahren nach Anspruch 13 oder 14, bei dem
die Modelle zusätzlich zu den Prognosemaßen weitere Maße als Variablen umfassen.

**16.** Verfahren nach Anspruch 15, bei dem
die weiteren Maße von Faktoren abhängen, welche die Entwicklung der technischen Anordnung betreffen, insbesondere Motivation und/oder Kenntnisstand der bei der Entwicklung beteiligten Personen und/oder geplante Zeitdauer für die Entwicklung der technischen Anordnung und/oder geplanter Testaufwand bei der Entwicklung.

**17.** Verfahren nach einem der Ansprüche 13 bis 16, bei dem die Modelle anhand der Datensätze klassifiziert werden, wobei je ein Klassifikationsmaß für die Güte der Klassifikation bestimmt wird.

**18.** Verfahren nach einem der Ansprüche 13 bis 17, bei dem statistische Verfahren zur Ermittlung der Modelle, insbesondere eine Diskriminanz- oder Regressionsanalyse, eingesetzt werden.

**19.** Verfahren nach einem der Ansprüche 13 bis 18, bei dem auf den Datensätzen ein Holdout-Verfahren zur Ermittlung des Modells umfassend die signifikanten Prognosemaße durchgeführt wird.

**20.** Verfahren zur Prognose der Einhaltung einer Zielvorgabe der Zuverlässigkeit einer technischen Anordnung, die Prozessormittel (PRZE) aufweist, auf denen Programmmittel ausgeführt werden, unter Verwendung von Prognosemaßen, bei dem:

- nach einem der Verfahren der Ansprüche 1 bis 12 die Prognosemaße ermittelt werden und
- mittels eines Modells umfassend Prognosemaße als Variablen prognostiziert wird, ob die Zielvorgabe eingehalten wird.

**21.** Verfahren nach Anspruch 20, bei dem das zur Prognose verwendete Modell eines der Modelle ist, die mit einem der Verfahren der Ansprüche 13 bis 19 bestimmt worden sind.

**22.** Verfahren nach Anspruch 21, bei dem das Modell umfassend die signifikanten Prognosemaße als Variablen zur Prognose verwendet wird.

**23.** Verfahren nach zumindest einem der vorhergehenden Ansprüche,
bei dem die technische Anordnung ein mobiles Endgerät, eine medizinische Apparatur, eine Vorrichtung zur Steuerung industrieller Prozesse, ein Rechner, eine Anordnung zur Energiegewinnung und/oder Energieverteilung und/oder eine Telekommunikationsanlage ist.

**24.** Programmprodukt für eine Datenverarbeitungsanlage, das Softwarecodeabschnitte enthält, mit denen ein Verfahren nach zumindest einem der vorhergehenden Ansprüche auf einer Datenverarbeitungsanlage ausgeführt werden kann.

25. Einrichtung zum Prognostizieren der Zuverlässigkeit einer technischen Anordnung, die Prozessormittel (PRZE) aufweist, auf denen Programmmittel ausführbar sind,

- mit Mitteln zum Ermitteln eines Analyse- und/oder Entwurfsprognosemaßes (APM, EPM), das den für das Erstellen der Programmmittel zu erwartenden Aufwand in einer Metrik der Analyse und/oder des Entwurfs angibt,
- mit Mitteln zum Ermitteln eines Implementierungsprognosemaßes (IPM), das den für das Erstellen der Programmmittel zu erwartenden Aufwand in einer Metrik der Implementierung angibt, aus dem Analyse- und/oder Entwurfsprognosemaß (APM, EPM),
- mit Mitteln zum Ermitteln eines Zuverlässigkeitsprognosemaßes (TZPM, FZPM), das die zu erwartende Zuverlässigkeit der Programmmittel angibt, aus dem Implementierungsprognosemaß (IPM).

26. Einrichtung zur Ermittlung einer Auswahl von für die Zuverlässigkeit einer technischen Anordnung signifikanten Prognosemaßen unter Verwendung von mehreren Datensätzen umfassend gemessene Zuverlässigkeiten, wobei die technische Anordnung Prozessormittel (PRZE) aufweist, auf denen Programmmittel ausgeführt werden, wobei mit der Einrichtung ein Verfahren nach einem der Ansprüche 13 bis 19 durchführbar ist, umfassend:

- Mittel zur Ermittlung von Prognosemaßen für jeden Datensatz nach einem Verfahren der Ansprüche 1 bis 12;
- Mittel zur Bestimmung der signifikanten Prognosemaße durch Ermittlung von Modellen, die Prognosemaße als Variablen umfassen, wobei eines der Modelle die signifikanten Prognosemaße umfasst.

27. Einrichtung zur Prognose der Einhaltung einer Zielvorgabe der Zuverlässigkeit einer technischen Anordnung, die Prozessormittel (PRZE) aufweist, auf denen Programmmittel ausgeführt werden, unter Verwendung von Prognosemaßen, wobei mit der Einrichtung ein Verfahren nach einem der Ansprüche 20 bis 22 durchführbar ist, umfassend:

- Mittel zur Ermittlung von Prognosemaßen gemäß einem Verfahren der Ansprüche 1 bis 12 ;
- Prognosemittel, mit denen mittels eines Modells umfassend Prognosemaße als Variablen prognostizierbar ist, ob die Zielvorgabe eingehalten wird.

**Claims**

1. Method for the computer-supported prognosis of the reliability of a technical arrangement using prognosis figures, in which the technical arrangement has processor means (PRZE) on which program means are run,

   - wherein an analysis and/or design prognosis figure (APM, EPM) is determined which gives the expected effort for producing the program means in a metric for the analysis and/or the design,
   - wherein an implementation prognosis figure (IPM) which gives the expected effort for producing the program means in a metric for the implementation is determined from the analysis and/or design prognosis figure (APM, EPM),
   - wherein a reliability prognosis figure (TZPM, FZPM) which gives the expected reliability of the program means is determined from the implementation prognosis figure (IPM).

2. Method according to at least Claim 1,
   wherein the reliability prognosis figure (TZPM, FZPM) is determined from the implementation prognosis figure (IPM) by determining the number of errors that are to be expected for the expected effort for producing the program means.

3. Method according to at least one of the preceding claims,
   wherein the prognosis is corrected after determining the effort actually required for producing the program means, in that the reliability prognosis figure (TZPM, FZPM) is recalculated from an implementation figure (IM) which gives the effort actually required for producing the program means in a metric for the implementation.

4. Method according to at least one of the preceding claims,

wherein the analysis and/or design prognosis figure (APM, EPM) gives the expected effort for producing the program means in function points (FP) of the function point method.

5. Method according to at least one of the preceding claims, wherein the implementation prognosis figure (IPM) gives the expected effort for producing the program means in the number (LOC) of expected lines of code.

6. Method according to at least one of the preceding claims, wherein the reliability prognosis figure (TZPM, FZPM) gives the expected reliability of the program means in the form of the mean time (MTTF) until a failure occurs.

7. Method according to at least one of the preceding claims, wherein the reliability prognosis figure (TZPM, FZPM) includes a field reliability prognosis figure (FZPM) which gives the reliability of the program means in a field phase of the program means.

8. Method according to at least one of the preceding claims, wherein the reliability prognosis figure (TZPM, FZPM) includes a test reliability prognosis figure (TZPM) which gives the reliability of the program means in a test phase of the program means.

9. Method according to at least Claim 8, wherein the trend of the test reliability prognosis figure (TZPM) is determined during the test phase.

10. Method according to at least Claim 8, wherein the duration and/or the effort of the test phase is determined from the determination of the test reliability prognosis figure (TZPM) during the test phase.

11. The method as claimed in at least Claim 8, wherein the maximum number of failures to be expected is determined from the implementation prognosis figure (IPM).

12. The method according to at least Claim 8, wherein the test reliability prognosis figure (TZPM) is determined with a failure frequency reduction rate.

13. Method for determining a selection of prognosis figures that are significant for the reliability of a technical arrangement using reliabilities measured including a plurality of data records, wherein the technical arrangement has processor means (PRZE) on which program means are run, wherein the method includes the following steps:

    - determining the prognosis figures for every data record in accordance with a method of the preceding claims;
    - determining the significant prognosis figures by determining models that include prognosis figures as variables, where one of the models includes the significant prognosis figures.

14. Method according to Claim 13, wherein a prognosis is made on the basis of the models regarding whether a specified target for the reliability of the technical arrangement will be met.

15. Method according to Claim 13 or 14, wherein, in addition to the prognosis figures, the models include further figures as variables.

16. Method according to Claim 15, wherein the further figures depend on factors relating to the development of the technical arrangement, in particular motivation and/or level of knowledge of the people involved in the development and/or planned duration for the development of the technical arrangement and/or planned testing outlay during development.

17. Method according to one of Claims 13 to 16, in which the models are classified on the basis of the data records, wherein one classification figure is determined for the quality of the classification in each case.

18. Method according to one of Claims 13 to 17, wherein statistical methods are used for determining the models, in particular a discrimination or regression analysis.

19. Method according to one of Claims 13 to 18, wherein a holdout method is used on the data records for determining the model that includes the significant prognosis figures.

**20.** Method for predicting, using prognosis figures, whether a specified reliability target for a technical arrangement which has processor means (PRZE) on which program means are run will be met, wherein:

- the prognosis figures are determined in accordance with one of the methods in Claims 1 to 12; and
- it is predicted by means of a model that includes prognosis figures as variables whether the specified target will be met.

**21.** Method according to Claim 20, wherein the model used for the prognosis is one of the models that have been determined using one of the methods of Claims 13 to 19.

**22.** Method according to Claim 21, wherein the model that includes significant prognosis figures as variables is used for the prognosis.

**23.** Method according to at least one of the preceding claims, wherein the technical arrangement is a mobile terminal, a medical device, a device for controlling industrial processes, a computer, an arrangement for power generation and/or energy distribution, and/or a telecommunications system.

**24.** A program product for a data processing system that contains sections of software code with which a method according to at least one of the preceding claims can be executed on a data processing system.

**25.** Device for predicting the reliability of a technical arrangement having processor means (PRZE) on which program means can be run,

- having means for determining an analysis and/or design prognosis figure (APM, EPM) which gives the expected effort for producing the program means in a metric for the analysis and/or the design,
- having means for determining an implementation prognosis figure (IPM) which gives the expected effort for producing the program means in a metric for implementation from the analysis and/or design prognosis figure (APM, EPM),
- having means for determining a reliability prognosis figure (TZPM, FZPM) which gives the expected reliability of the program means from the implementation prognosis figure (IPM).

**26.** Device for determining a selection of prognosis figures that are significant for the reliability of a technical arrangement using reliabilities measured including a plurality of data records, wherein the technical arrangement has processor means (PRZE) on which program means are run, wherein it is possible to perform with the device a method as claimed in one of Claims 13 to 19, including:

- means for determining prognosis figures for every data record according to one of the methods set out in Claims 1 to 12;
- means for determining the significant prognosis figures by determining models that include prognosis figures as variables, where one of the models includes the significant prognosis figures.

**27.** Device for predicting, using prognosis figures, whether a specified reliability target for a technical arrangement having processor means (PRZE) on which program means are run will be met, wherein a method as claimed in one of Claims 20 to 22 may be performed with the device, including:

- means for determining prognosis figures according to a method set out in Claims 1 to 12;
- prognosis means with which it is possible to predict by means of a model that includes prognosis figures as variables whether the specified target will be met.

**Revendications**

**1.** Procédé pour le pronostic automatisé de la fiabilité d'un ensemble technique avec l'utilisation de cotes de pronostic, l'ensemble technique présentant des moyens de processeur (PRZE), sur lesquels sont réalisés des moyens de programme,

- dans lequel on détermine une cote de pronostic d'analyse et/ou de projet (APM, EPM), qui indique la dépense à escompter pour l'élaboration des moyens de programme dans une métrique de l'analyse et/ou du projet,

- dans lequel on détermine une cote de pronostic de mise en oeuvre (IPM), qui indique la dépense à escompter pour l'élaboration des moyens de programme dans une métrique de la mise en oeuvre, à partir de la cote de pronostic d'analyse et/ou de projet (APM, EPM),

- dans lequel on détermine une cote de pronostic de fiabilité (TZPM, FZPM), qui indique la fiabilité à escompter des moyens de programme, à partir de la cote de pronostic de mise en oeuvre (IPM).

**2.** Procédé selon au moins la revendication 1,
dans lequel la cote de pronostic de fiabilité (TZPM, FZPM) est déterminée à partir de la cote de pronostic de mise en oeuvre (IPM) par le calcul du nombre d'erreurs qui peut être attendu pour la dépense à escompter pour l'élaboration des moyens de programme.

**3.** Procédé selon au moins l'une quelconque des revendications précédentes,
dans lequel le pronostic est corrigé après la détermination de la dépense utilisée réellement pour l'élaboration des moyens de programme, en calculant de nouveau la cote de pronostic de fiabilité (TZPM, FZPM) à partir d'une cote de mise en oeuvre (IM) qui indique réellement la dépense utilisée pour l'élaboration des moyens de programme dans une métrique de la mise en oeuvre.

**4.** Procédé selon au moins l'une quelconque des revendications précédentes,
dans lequel la cote de pronostic d'analyse et/ou de projet (APM, EPM) indique la dépense à escompter pour l'élaboration des moyens de programme en points de fonction (FP) de la méthode de Function-Point.

**5.** Procédé selon au moins l'une quelconque des revendications précédentes,
dans lequel la cote de pronostic de mise en oeuvre (IPM) indique la dépense à escompter pour l'élaboration des moyens de programme dans le nombre (LOC) des lignes de programme à escompter.

**6.** Procédé selon au moins l'une des revendications précédentes,
dans lequel la cote de pronostic de fiabilité (TZPM, FZPM) contient la fiabilité à escompter des moyens de programme sous la forme du temps moyen (MTTF) jusqu'à l'apparition d'une défaillance.

**7.** Procédé selon au moins l'une quelconque des revendications précédentes,
dans lequel la cote de pronostic de fiabilité (TZPM, FZPM) contient une cote de pronostic de fiabilité de champ (FZPM) qui indique la fiabilité des moyens de programme dans une phase de champ des moyens de programme.

**8.** Procédé selon au moins l'une quelconque des revendications précédentes,
dans lequel la cote de pronostic de fiabilité (TZPM, FZPM) contient une cote de pronostic de fiabilité de test (TZPM), qui indique la fiabilité des moyens de programme dans une phase de test des moyens de programme.

**9.** Procédé selon au moins la revendication 8,
dans lequel la courbe de la cote de pronostic de fiabilité de test (TZPM) est déterminée au cours de la phase de test.

**10.** Procédé selon au moins la revendication 8,
dans lequel la durée et/ou la dépense de la phase de test est(sont) déterminée(s) à partir du calcul de la cote de pronostic de fiabilité de test (TZPM) pendant la phase de test.

**11.** Procédé selon au moins la revendication 8,
dans lequel le nombre maximum à escompter de défaillances est déterminé à partir de la cote de pronostic de mise en oeuvre (IPM).

**12.** Procédé selon au moins la revendication 8,
dans lequel la cote de pronostic de fiabilité de test (TZPM) est déterminée avec un taux de réduction de fréquence de défaillance.

**13.** Procédé pour la détermination d'un choix de cotes de pronostic significatives pour la fiabilité d'un ensemble technique avec l'utilisation de plusieurs ensembles de données comprenant des fiabilités mesurées, l'ensemble technique présentant des moyens de processeur (PRZE), sur lesquels sont réalisés des moyens de programme, le procédé comprenant les étapes suivantes :

- calcul des cotes de pronostic pour chaque ensemble de données selon un procédé des revendications précédentes ;
- détermination des cotes de pronostic significatives par le calcul de modèles, qui comprennent des cotes de pronostic comme variables, l'un des modèles comprenant les cotes de pronostic significatives.

14. Procédé selon la revendication 13, dans lequel
on prévoit au moyen des modèles si une spécification d'objectif pour la fiabilité de l'ensemble technique est respectée.

15. Procédé selon la revendication 13 ou 14, dans lequel
les modèles comprennent en supplément des cotes de pronostic d'autres cotes comme variables.

16. Procédé selon la revendication 15, dans lequel
les autres cotes dépendent de facteurs qui concernent le développement de l'ensemble technique, en particulier la motivation et/ou l'état de connaissance des personnes impliquées dans le développement et/ou la durée prévue pour le développement de l'ensemble technique et/ou la dépense de test planifiée lors du développement.

17. Procédé selon l'une quelconque des revendications 13 à 16, dans lequel
les modèles sont classifiés à l'aide des ensembles de données, une cote de classification étant déterminée pour la qualité de la classification.

18. Procédé selon l'une quelconque des revendications 13 à 17, dans lequel
des procédés statistiques sont utilisés pour le calcul des modèles, en particulier une analyse de discrimination ou de régression.

19. Procédé selon l'une quelconque des revendications 13 à 18, dans lequel
un procédé de Holdout pour le calcul du modèle comprenant les cotes de pronostic significatives est appliqué aux ensembles de données.

20. Procédé pour le pronostic du respect d'une spécification d'objectif de la fiabilité d'un ensemble technique, qui présente des moyens de processeur (PRZE), sur lesquels des moyens de programme sont réalisés, avec l'utilisation de cotes de pronostic, dans lequel

- les cotes de pronostic sont calculées selon l'un des procédés des revendications 1 à 12 et
- on prévoit au moyen d'un modèle comprenant des cotes de pronostic comme variables si la spécification d'objectif est respectée.

21. Procédé selon la revendication 20, dans lequel le modèle utilisé pour le pronostic est l'un des modèles qui ont été déterminés avec l'un des procédés des revendications 13 à 19.

22. Procédé selon la revendication 21, dans lequel le modèle comprenant les cotes de pronostic significatives comme variables est utilisé pour le pronostic.

23. Procédé selon au moins l'une quelconque des revendications précédentes,
dans lequel l'ensemble technique est un terminal mobile, un appareil médical, un dispositif pour la commande de processus industriels, un calculateur, un ensemble pour l'obtention d'énergie et/ou la répartition d'énergie et/ou une installation de télécommunication.

24. Produit de programme pour une installation de traitement de données, qui contient des parties de code de logiciel, avec lesquelles un procédé selon au moins l'une quelconque des revendications précédentes peut être appliqué sur une installation de traitement de données.

25. Appareil pour le pronostic de la fiabilité d'un ensemble technique, qui présente des moyens de processeur (PRZE), sur lesquels des moyens de programme peuvent être réalisés,

- avec des moyens pour le calcul d'une cote de pronostic d'analyse et/ou de projet (APM, EPM), qui indique la dépense à escompter pour l'élaboration des moyens de programme dans une métrique de l'analyse et/ou du projet,

14

- avec des moyens pour le calcul d'une cote de pronostic de mise en oeuvre (IMP), qui indique la dépense à escompter pour l'élaboration des moyens de programme dans une métrique de la mise en oeuvre, à partir de la cote de pronostic d'analyse et/ou du projet (APM, EPM),
- avec des moyens pour le calcul d'une cote de pronostic de fiabilité (TZPM, FZPM), qui indique la fiabilité à escompter des moyens de programme, à partir de la cote de pronostic de mise en oeuvre (IPM).

26. Appareil pour la détermination d'un choix de cotes de pronostic significatives pour la fiabilité d'un ensemble technique avec l'utilisation de plusieurs ensembles de données comprenant des fiabilités mesurées, l'ensemble technique présentant des moyens de processeur (PRZE), sur lesquels sont réalisés des moyens de programme, un procédé pouvant être appliqué avec l'appareil selon l'une quelconque des revendications 13 à 19, comprenant :

- des moyens pour le calcul de cotes de pronostic pour chaque ensemble de données selon un procédé des revendications 1 à 12 ;
- des moyens pour la déterminationdes cotes de pronostic significatives par le calcul de modèles, qui comprennent des cotes de pronostic comme variables, l'un des modèles comprenant les cotes de pronostic significatives.

27. Appareil pour le pronostic du respect d'une spécification d'objectif de la fiabilité d'un ensemble technique, qui présente des moyens de processeur (PRZE), sur lesquels sont réalisés des moyens de programme, avec l'utilisation de cotes de pronostic, un procédé pouvant être appliqué avec l'appareil selon l'une quelconque des revendications 20 à 22, comprenant :

- des moyens pour le calcul de cotes de pronostic selon un procédé des revendications 1 à 12 ;
- des moyens de pronostic avec lesquels on peut prévoir au moyen d'un modèle comprenant des cotes de pronostic comme variables si la spécification d'objectif est respectée.

Fig. 1

| | A | B | C | D | E |
|---|---|---|---|---|---|
| E | | | | | FZM[MTTF] |
| D | | | | TZM[MTTF] | FZPM[MTTF] |
| C | | | IM[LOC] | TZPM[MTTF] | FZPM[MTTF] |
| B | | EPM[FP] | IPM[LOC] | TZPM[MTTF] | FZPM[MTTF] |
| A | APM[FP] | EPM[FP] | IPM[LOC] | TZPM[MTTF] | FZPM[MTTF] |

Fig. 2

$N_{ges}$

$N_{test}$

$h$

$t_{test}$

Fig. 3

MEM

CPU

IOS

PRZE

BUS

IFC

MON

PRT

MAS

TAST